# EUROPEAN PATENT APPLICATION

(11) **EP 2 458 838 A1**
(43) Date of publication of application: **30.05.2012**
(21) Application number: 11164986.9
(22) Date of filing: 05.05.2011
(51) Int. Cl.: H04N 1/00

(54) **Image forming apparatus and facsimile transmitting method thereof**

(30) Priority: 25.11.2010 KR 20100118189
(71) Applicant: Samsung Electronics Co., Ltd., Suwon-si Gyeonggi-do 442-742 (KR)
(72) Inventor: Hur, Seung-ho, Gyeonggi-do (KR); Hwangbo, Joon-hyung, Gyeonggi-do (KR)
(74) Representative: Brandon, Paul Laurence

(57) **Abstract**

An image forming apparatus includes a plurality of fax lines and a user interface unit that receives a fax job request from a user who is allocated to at least one allocated fax line among the plurality of fax lines. The image forming apparatus further includes a TTI producing unit that produces a TTI corresponding to the fax line allocated to the user, an image processing unit that produces a fax image based on the produced TTI and the fax job request, and a fax unit that transmits the fax image using an idle line among the plurality fax lines when the user's allocated fax line is in use.

## Description

### CROSS-REFERENCE TO RELATED APPLICATIONS

This application claims priority under 35 U.S.C. § 119(a) from Korean Patent Application No. 10-2010-0118189, filed on November 25, 2010, in the Korean Intellectual Property Office, the disclosure of which is incorporated herein by reference in its entirety.

### BACKGROUND OF THE INVENTION

### 1. Field of the Invention

Apparatuses and methods consistent with the present general inventive concept relate to an image forming apparatus and a facsimile transmitting method adapted to transmit fax by using other's fax line when the user's allocated fax line is in use.

### 2. Description of the Related Art

Generally, an image forming apparatus is an apparatus to print a printing data from a terminal equipment such as a computer on a printing paper. Examples of image forming apparatuses include copiers, printers, facsimiles and Multi Function Peripherals (MFP) integrating functions of the aforementioned apparatuses in a single apparatus.

Recent image forming apparatuses may be connected to two or more facsimile (fax) lines having different users authorized to use each fax line. Specifically, one fax line may be set and used only by a specified user 'A' while the other fax line may be set and used only by a specified user `B'.

However, if the fax lines are authorized only to the specified users, the use efficiency of the fax is deteriorated. Specifically, when the user 'A' uses the fax line 1 exclusively, the user 'A' may not perform other fax job if the fax line 1 is in use.

### SUMMARY OF THE INVENTION

An exemplary embodiment of the present general inventive concept addresses at least the above problems and/or disadvantages and other disadvantages not described above. Also, the exemplary embodiment is not required to overcome the disadvantages described above, and the exemplary embodiment of the present general inventive concept may not overcome any of the problems described above.

Additional features and utilities of the present general inventive concept will be set forth in part in the description which follows and, in part, will be obvious from the description, or may be learned by practice of the general inventive concept.

The present general inventive concept is provided with an image forming apparatus and a fax transmitting method adapted to transmit fax by using other's fax line when the user's allocated fax line is in use.

According to an exemplary embodiment of the present general inventive concept, there is provided an image forming apparatus having plural fax lines, the apparatus including a user interface unit which receives a request of fax job from a user allocated for at least one fax line among the plural fax lines, a TTI producing unit which produces a TTI corresponding to the fax line allocated to the user, an image processing unit which produces fax image from the produced TTI and the fax job, and a fax unit which transmits the fax image using an idle line among the plural fax lines if the user's allocated fax line is in use.

The user interface unit is inputted with a user's ID and password and then receives a request of fax job from an authenticated user.

The TTI producing unit produces a TTI including information of a fax number of the user's allocated fax line.

The apparatus further includes a fee charging unit which calculates usage fees on each user, and a storage unit which stores the calculated usage fees on each user, wherein the fee charging unit charges the fees of the fax job to the user corresponding to the line transmitted the fax image, deducts the amount of the charged fax fees from the printing fee or the copying fee of the 'user corresponding to the idle line through which the fax image is transmitted', and charges fees corresponding to the charged fax fees to the printing fee or copying fee of the user performed the fax job.

The apparatus may further include a storage unit which stores, as a log information, information of the user who performed the fax job and information of the fax line through which the fax image is transmitted.

The fax unit may include a first modem which transmits fax image using a first fax line, and a second modem which transmits fax image using a second fax line.

The TTI producing unit produces a TTI corresponding to the first fax line if a first user allocated to the first fax line transmits fax image using the second fax line, and produces a TTI corresponding to the second fax line, if the second user allocated to the second fax line transmits fax image using the first fax line.

The apparatus may further include a fee charging unit which separately calculates usage fees of the first user allocated to the first fax line and fee of the second user allocated to the second fax line, and a storage unit which stores the calculated usage fees per each user, wherein the fee charging unit charges the fees of the fax job to the second user, deducts the amount of the charged fax fees from the printing fee or the copying fee of the second user, and charges the amount corresponding to the charged fax fee to the printing fee or copying fee of the first user, if the first user transmits fax image using the second fax line and the fee charging unit charges the fees of the fax job to the first user, deducts the amount of the charged fax fees from the printing fee or the copying fee of the first user, and charges the amount corresponding to the charged fax fee to the printing fee or copying fee of the second user, if the second user transmits fax image using the first fax line.

According to an exemplary embodiment of the present general inventive concept, there is provided a fax transmitting method of an image forming apparatus having plural fax lines includes receiving a fax job request from a user allocated to at least one of the fax line among the plural fax lines; producing a TTI corresponding to a fax line allocated to the user; producing fax image from the produced TTI and the fax job; and transmitting the fax image using an idle line among the plural fax lines if the user's allocated fax line is in use.

The receiving a fax job request is inputted with an ID and a password from the user and then receives a request of fax job from an authenticated user.

The producing a TTI produces a TTI including a fax number information allocated to the user.

The method further includes calculating a usage fee on each user, and storing the calculated usage fee charges on each user, wherein the calculating the usage fee charge charges the fees of fax job to the user corresponding to the idle line through which the fax image is transmitted, deducts the amount of the charged fax fees from the printing fee or the copying fee of the 'user corresponding to the idle line through which the fax image is transmitted', and charges the fees corresponding to the charged fax fees to the printing fee or copying fee to the user who performed the fax job.

The method may further include storing, as a log information, the information of the user who performed the fax job and the information of the fax line through which the fax image is transmitted.

The plural fax line includes a first fax line and a second fax line, and producing a TTI produces a TTI corresponding to the first fax line if a first user allocated to the first fax line transmits fax image using the second fax line, and produces a TTI corresponding to the second fax line, if the second user allocated to the second fax line transmits fax image using the first fax line.

The plural fax lines includes the first fax line and the second fax line, and further includes calculating separately usage fees to the first user who is allocated for the first fax line and to the second user who is allocated to the second fax line, and storing the calculated usage fees on each user, wherein calculating the fax usage fees, in case the first user transmits fax image through the second fax line, is charged for the fee of the fax job to the second user, and the corresponding amount to the charged fax fee is deducted from the printing fee or the copying fee of the second user, and the corresponding amount of the charged fax fee is charged to the printing fee or the copying fee of the first user, and in case the second user transmits fax image through the first fax line, the fax fee of the fax job is charged to the first user, and the corresponding amount to the charged fax fee is deducted from the printing fee or the copying fee of the first user, and the corresponding amount of the charged fax fee is charged to the printing fee or the copying fee of the second user.

In another features of the present general inventive concept, an image forming apparatus comprises a fax unit to transmit a fax image input by a first user over a plurality of fax lines including an allocated fax line allocated to the first user and a copying fee of the first user, and an unallocated fax line allocated to a second user different from the first user and a copying fee of the second user, and a control module to control the fax unit to select a transmission fax line among the plurality of fax lines based on the availability of the allocated fax line, and to determine whether the selected transmission fax line used to transmit the fax image is one of the allocated fax line or the unallocated fax line.

### BRIEF DESCRIPTION OF THE DRAWINGS

These and/or other features and utilities of the present general inventive concept will become apparent and more readily appreciated from the following description of the exemplary embodiments, taken in conjunction with the accompanying drawings of which:

FIG. 1 is a block-diagram illustrating a configuration of an image forming apparatus according to an exemplary embodiment;

FIG. 2 illustrates an example of TTI generated according to an exemplary embodiment;

FIG. 3 illustrates an example of a fax image generated according to an exemplary embodiment;

FIG. 4 illustrates a process of the fee charging unit of FIG. 1;

FIG. 5 illustrates a log information generated according to an exemplary embodiment; and

FIG. 6 is a flowchart illustrating a fax transmitting method according to an exemplary embodiment.

### DETAILED DESCRIPTION OF THE PREFERRED EMBODIMENTS

Reference will now be made in detail to the exemplary embodiments of the present general inventive concept, examples of which are illustrated in the accompanying drawings, wherein like reference numerals refer to the like elements throughout. The exemplary embodiments are described below in order to explain the present general inventive concept while referring to the figures.

The matters defined in the description, such as detailed construction and elements, are provided to assist in a comprehensive understanding of the general inventive concept. Thus, it is apparent that the exemplary embodiments can be carried out without those specifically defined matters. Also, well-known functions or constructions are not described in detail since they would obscure the general inventive concept with unnecessary detail.

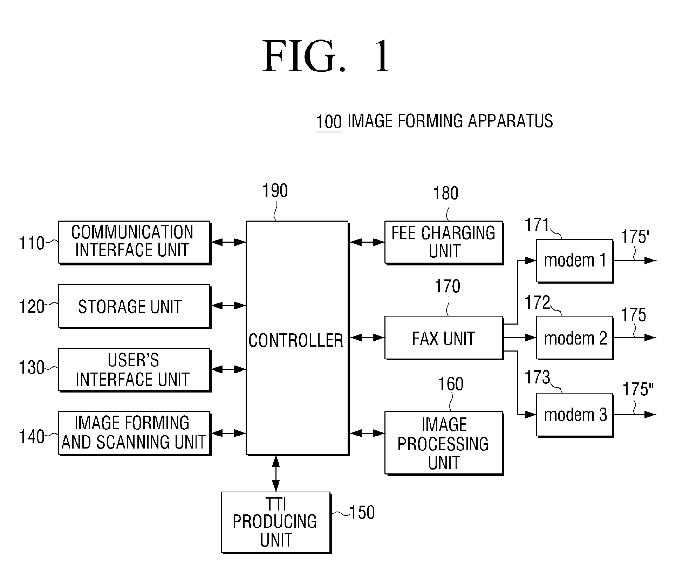

FIG. 1 is a block-diagram illustrating a configuration of an image forming apparatus according to an exemplary embodiment.

With reference to FIG. 1, an image forming apparatus 100 comprises a communication interface unit 110, a storage unit 120, a user interface unit 130, an image forming & scanning unit 140, a TTI producing unit 150, an image processing unit 160, a fax unit 170 to communicate with one or more fax lines 175, a fee charging unit 180, and a controller 190.

The communication interface unit 110 is formed to connect the image forming apparatus 100 to a printing control terminal equipment (not shown) through a Local Area Network (LAN), an internet network, or a Universal Serial Bus (USB) port.

The communication interface unit 110 may receive fax job from the printing control terminal equipment (not shown) and transmit fax job which is received through the fax unit 170 to an external fax server (not shown) or a printing control terminal equipment (not shown) via the one or fax lines 175. The one or more fax lines may include a plurality of fax lines 175. The plurality of fax lines 175 may further include one or more allocated fax lines 175' allocated to a particular user, and one or more unallocated fax lines, such as an idle fax lines 175". Although an idle fax line 175" may not be allocated to a particular user, or may not be allocated to the particular submitting the fax mob request, a user may still utilize the idle fax line 175" when their corresponding allocated fax lines 175' is in use.

The storage unit 120 stores user information of each user utilizing the image forming apparatus 100. More specifically, , the storage unit 120 may store the user information of an allocated fax line 175' allocated to a particular user and the information of identifying whether the user has an authorization to use the image forming apparatus 100 (e.g. user's ID and password). For example, in an image forming apparatus having three fax lines, the user A may be allocated to the first fax line, the user B may be allocated to the second fax line, and the user C may be allocated to the third fax line. The storage unit 120 may store the user information of user A, user B and user C corresponding to each user's respective allocated fax line. Additionally, the storage unit 120 may store fax line information corresponding to each respective user.

The storage unit 120 may store a usage fee corresponding to the fax job performed by a user over a particular fax line. Specifically, the storage unit 120 may store the amount of fee calculated at the after-mentioned fee charging unit 180 of each user.

For example, the storage unit 120 may store log information 500, which indicates the user who performed the fax job. The log information 500 may also in indicate the fax line used to transmit the fax image. The storage unit 120 may be embodied by a storage medium inside the image forming apparatus 100 or an external storage medium, for instance a removable disk including a USB memory.

The user interface unit 130 includes a plurality of functional keys through which the user may set and/or select various functions supported by the image forming apparatus 100 and may display various information provided from the image forming apparatus 100. The user interface unit 130 may be performed by an apparatus combining the mouse and the monitor. Alternatively, the user interface 130 may include an apparatus where the input and the output are simultaneously embodied such as a touch pad.

Through a user interface (UI) window provided by the user interface unit 130, the user may input an ID and password. Accordingly, an authentication procedure may be performed to determine whether a particular user is authorized to use the image forming apparatus 100. In addition, through the UI window provided by the user interface unit 130, the user may submit (input) the fax job request to execute transmission of one or more fax images.

The fax job request from each user corresponds to a fax job a respective fax job desired by a particular user. Accordingly, the user may utilize the image forming apparatus 100 to transmit one or more fax images over a fax line 175, as described above. After the transmission of the one or more images has been completed, the fax job may be determined as completed. Further, after the fax job is completed, a usage fee corresponding to the authorized user who completed the fax job may be calculated. Alternatively, the usage fee may be calculated prior to completing execution of the fax job, as discussed in greater detail below.

Each authorized user of the image forming apparatus 100 accrues a printing fee and/or copying fee based on the number of completed fax jobs. That is, after each fax job has been completed, the printing fee and/or copying fee of a respective user is incremented by the calculated usage fee. Accordingly, a total printing fee and/or copying fee may be determined based on the total accrued usage fees corresponding to the particular authorized user. However, a calculated usage fee may also be deducted from a users printing fee and/or copying fee to prevent a user from being incorrectly charged with another user's usage fee, as discussed further below.

The image forming and scanning unit 140 executes printing and/or scanning operations. Specifically, the image forming and scanning unit 140 may execute the printing operation to print a job received through the communication interface unit 110, the copying job scanned through the scanning unit, and the fax receiving job received through the fax unit 170. Furthermore, the image forming and scanning unit 140 may execute the scanning of documents.

The TTI producing unit 150 produces transmit terminal identification (TTI) corresponding to an allocated fax line allocated to a particular user. Specifically, the TTI producing unit 150 may produce TTI which includes the telephone number information of the allocated fax line allocated to the particular user and used to perform a corresponding fax job. For example, in a situation where a first user who is allocated to a first fax line transmits a fax image using a second fax line (as opposed to their allocated first fax line), the TTI producing unit 150 may still produce a TTI corresponding to the first fax line allocated to the first user. In a similar situation where a second user who is allocated to a second fax line transmits a fax image using the first fax line (as opposed to their allocated second fax line), the TTI producing unit 150 may produce a TTI corresponding to the second fax line allocated to the second user. Accordingly fax jobs corresponding to the proper users may be identified, despite situations where a user utilizes a fax line other than their allocated fax line.

The TTI producing unit 150 may also produce TTI including additional user information. For instance, by using preserved information of the storage unit 120 such as the user's name, the TTI producing unit 150 may produce TTI including the user's name and the telephone number of the fax line allocated to the user.

The image processing unit 160 may produce a fax image based on the produced TTI and the received fax job. Specifically, the image processing unit 160 may amalgamate a fax transmission job received through the communication interface unit 110 and/or a scanned image received at the image forming and scanning unit 140. Accordingly, the TTI produced at the TTI producing unit 150 may convert the fax job amalgamated with the TTI into fax image which is suitable based on a fax transmission standard. Various facsimile protocols/fax transmission standards may be used to perform the fax transmission job including, but not limited to, T. 30 Protocol. In a situation where a fax option is established from the user interface unit 130, the image processing unit 160 may produce a fax image based on the established fax option.

The fax unit 170 may include a plurality of modems 171, 172, and 173. Each modem 171, 172, and 173 is in electrical communication with a different fax line, respectively, such that a fax image may be transmitted thereover. Each modem may also correspond with a respective group of fax lines. Accordingly, each modem may select a fax line among their respective group of fax lines, and transmit one or more fax images over the selected fax line. In an exemplary embodiment, the plural modems are equipped in one fax unit 170; however, it is also possible to use the plural fax units including one modem, respectively.

The fax unit 170 may receive one or more fax images from the image process unit 160, and may transmit the fax images through a modem corresponding to an allocated fax line of the particular user who initiated that fax job request. Specifically, the fax unit 170, in case the user's allocated fax line is in idle, transmits a fax image produced at the image processing unit 160 through the allocated fax line of the user. However, if the user's allocated fax line is in use, the fax unit transmits the fax image produced at the image processing unit 160 using an idle line among the plural fax lines. In this case, the idle line means a fax line which does not execute the fax job at present among the fax lines connected to the image forming apparatus 100. In other words, the fax unit 170 may receive one or more fax images from the image process unit 160, and may transmit the fax images through a modem controlling an idle line, which is not allocated to the particular user initiating the fax job request, but which is nonetheless available to perform the requested fax job.

Further, the log information 500 stored by the storage unit 120 may include information indicating which modem 175 is initiated to transmit a fax image over a corresponding fax line. Accordingly, the user who performed the fax job may be determined based on which modem 175 is initiated.

The fee charging unit 180 calculates the fee of each user, which is accrued upon completing a fax job. Specifically, if a user transmits a fax image through an allocated fax line allocated to a particular user, the fee charging unit 180 may charge the usage fee accrued after completing the fax job to the particular user. For example, if a first user who is allocated to a first fax line transmits a fax job through their allocated first fax line, the fee charging unit 180 may charge a usage fax fee to the first user associated with the completed fax job.

On the other hand, if a user desiring to perform a fax job transmits a fax image through an idle fax line which is not allocated to the user, the usage fax fee accrued according to the completed fax job is charged to an idle user associated with the idle line through which the fax image is transmitted. Accordingly, the corresponding amount of the charged usage fax fee may be deducted from the idle user's printing fee and/or copying fee corresponding to the idle line through which the fax image is transmitted, and the amount of the charged usage fax fee may be properly charged to the printing fee and/or copying fee of the user who actually executed the fax job. Accordingly, the idle user is not incorrectly charged with a usage fax fee.

For example, if a first user who is allocated to a first fax line transmits one or more fax images of a first fax job through a second fax line, the fee charging unit 180 charges a usage fax fee corresponding to the first fax job to a second user who is allocated to the second fax line. In order to prevent the second user from being improperly assessed a usage fax fee, the corresponding amount of the usage fax fee charged to the second user may be deducted from the second user's printing fee and/or copying fee. Accordingly, the corresponding amount of the usage fax fee may then be charged to the first user's printing fee and/or copying fee, since the first user actually performed the fax job.

On the contrary, in case the second user who is allocated to the second fax line performs a second fax job using the first fax line allocated to the first user, the fee charging unit 180 charges a usage fax fee corresponding to the second fax job to the first user who is allocated to the first fax line. In order to prevent the first user from being improperly assessed the usage fax fee resulting from the second fax job, the corresponding amount of the charged usage fax fee charged to the first user may be deducted from the first user's printing fee or copying fee, and the corresponding amount of the charged usage fax fee may be charged to the second user's printing fee or copying fee. In an exemplary embodiment, it is described how to utilize the printing fee and copying fee, however, it is applicable that the fees are charged to the other functions of the image forming apparatus 100.

The controller 190 may control each unit of the image forming apparatus 100. Specifically, the controller 190 is requested to execute a fax job through the user interface unit 130 or the communication interface 110. Accordingly the controller 190 may control the TTI producing unit 150 to produce corresponding TTI regarding the fax line allocated to the particular user, and may control the image processing unit 160 to amalgamate the produced TTI and fax job. Furthermore, the controller 190 may control the fax unit 170 to transmit the generated fax image using one fax line among the plurality of fax lines.

As described above, the image forming apparatus 100 according to an exemplary embodiment may execute fax transmission using an idle line when the allocated fax line of a user is in use. Regardless of the fax line, as the image forming apparatus produces and utilizes TTI of the fax line corresponding to the user, the fax receiving counterpart may easily confirm the counterpart who transmitted fax. Moreover, the image forming apparatus may properly charge a usage fee to the correct user performing the fax job, even if the user executes the fax transmission through other fax lines and/or idle lines, which are not allocated to the user. Accordingly, the controller 190 may determine whether the fax line 17 used to transmit the fax image is an allocated fax line 175' allocated to the authorized user, or whether the fax line 175 is an idle fax line 175". Further, the controller 190 is in electrical communication with the fee charging unit 180. As a result, the fee charging unit 180 may be informed by the controller 190 whether the fax line 175 used to transmit the fax image is an allocated fax line 175' allocated to the authorized user, or whether the fax line 175 is an idle fax line 175"

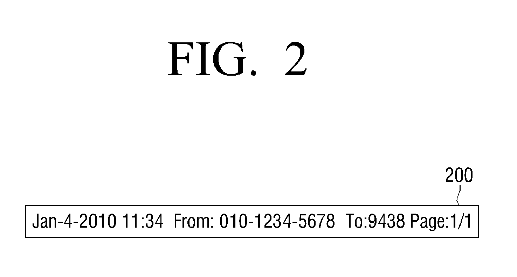

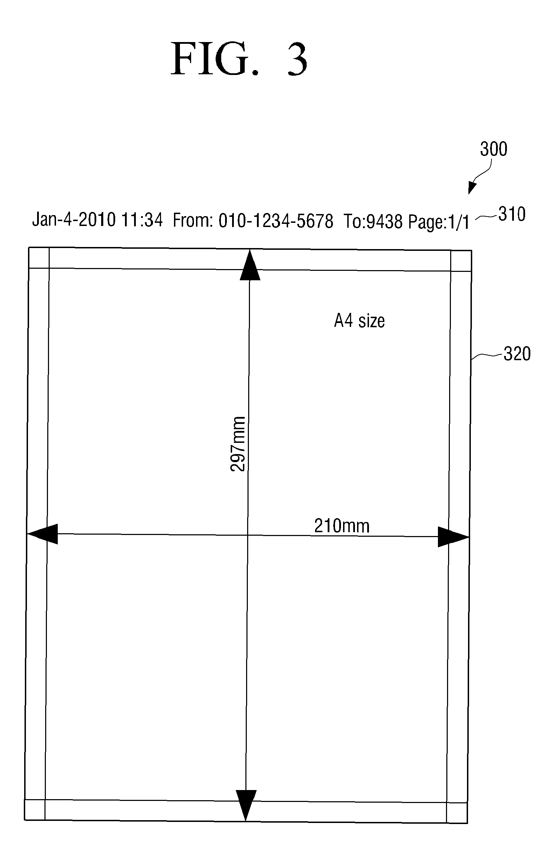

FIG. 2 illustrates an example of TTI generated according to an exemplary embodiment. Additionally, FIG. 3 illustrates an example of a fax image generated according to an exemplary embodiment.

Referring to FIGS. 2 and 3, it may be confirmed that a fax image 300 is generated since TTI 200 produced from the TTI producing unit 150 is located at an upper portion 310 of a receiving fax data 320.

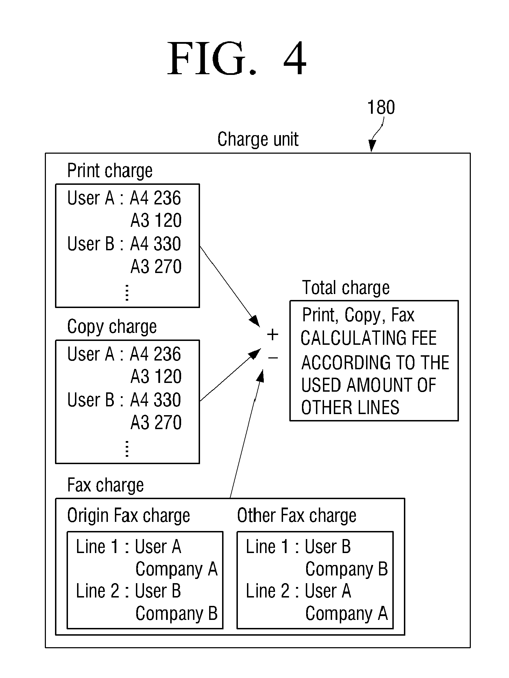

FIG. 4 illustrates a process of the fee charging unit 180 of FIG. 1.

With reference to FIG. 4, the fee charging unit 180 may be informed by the controller 190 whether the fax line 175 used to transmit the fax image is an allocated fax line 175' allocated to the authorized user, or whether the fax line 175 is an idle fax line 175". Accordingly, the fee charging unit 180 may apply the fee resulting from a fax job performed by a corresponding user when the user transmits a fax image through their own allocated fax line.

On the other hand, if the user transmits a fax image through an unallocated fax line, i.e., an idle fax line and/or fax line other than their allocated fax line, the usage fee resulting from the executed fax job is charged to the user corresponding to the idle line that transmitted the fax image. In order to prevent improperly charging a usage fee to a user who did not perform the actual fax job, the corresponding amount of the charged usage fax fee is deducted from the printing fee and/or copying fee of the user corresponding to the unallocated line through which the fax image is transmitted. Accordingly, the corresponding amount of the charged usage fax fee may be properly charged to the printing fee and/or the copying fee of the user who actually executed the fax job.

For example, if the first user who is allocated to the first fax line transmits a first fax job through the second fax line, the fee charging unit 180 charges the usage fax fee corresponding to the first fax job to the second user who is allocated to the second fax line. The corresponding amount of the charged fax fee is then deducted from the printing fee and/or the copying fee of the second user, and the corresponding amount of the usage fax fee may be charged to the printing fee and/or the copying fee of the first user.

On the contrary, if the second user who is allocated to the second fax line transmits a second fax job through the first fax line, the fee charging unit 180 charges the usage fax fee corresponding to the second fax job to the first user who is allocated to the first fax line. Then, the corresponding amount of the charged usage fax fee is deducted from the printing fee and/or the copying fee of the first user, and corresponding amount of the fax usage fee may be charged to the printing fee and/or the copying fee of the second user.

Thus, even if the usage fax fee of a fax job is charged according to each fax line, the image forming apparatus 100 according to an exemplary embodiment may compensate the usage fax fee charged through other functions such as the printing job and the copying job, thereby charging the appropriate user with the correct usage fax fee.

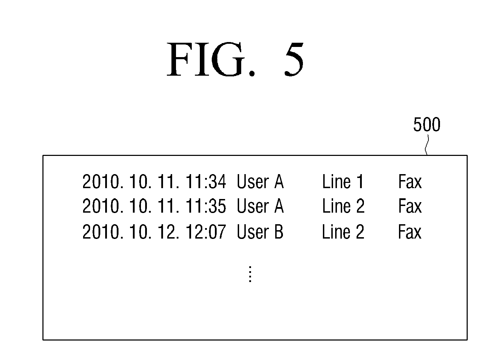

FIG. 5 illustrates log information 500 generated according to an exemplary embodiment. The log information 500 may include history information recording the fax jobs performed at the image forming apparatus 100. The history information may include the information of the user who executed fax job and the fax line transmitted the fax image.

With reference to FIG. 5, even if each fax line is allocated to a different user, it can be determined that the user A may execute a fax transmission through another idle line (line 2) if their own allocated fax line (line 1) is in use.

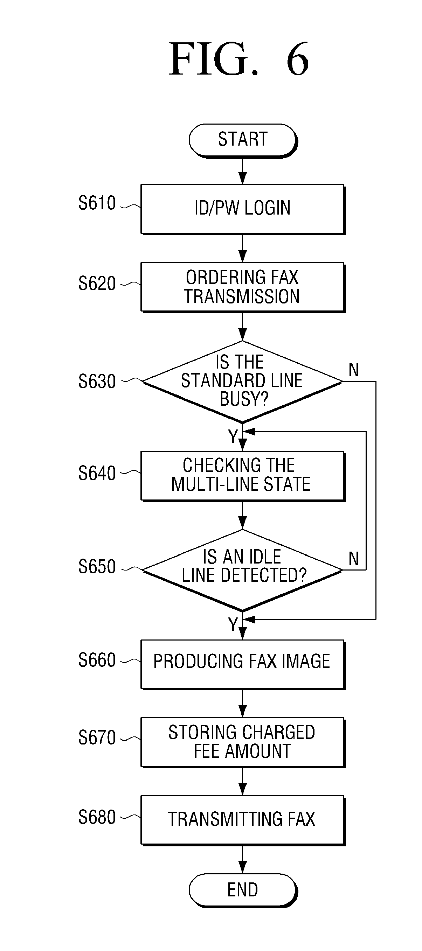

FIG. 6 is a flowchart illustrating a fax transmitting method according to an exemplary embodiment of the present general inventive concept.

First, a user's authentication is implemented (operation S610). Specifically, if the user inputs the ID and the password, the user's authentication is determined based on the inputted ID and password. Then, if the user is authenticated, the execution of fax job may be requested by the authenticated user (operation S620).

If the execution of the fax job is requested, a determination is made as to whether the allocated fax line allocated to the authorized user may be used (operation S630). If the allocated fax line allocated to the authorized user may be used (i.e., is not in use), the fax line allocated to the authorized user may be selected as the fax line to perform fax job.

On the contrary, if the allocated fax line allocated to the authorized user is in use, a determination is made as to whether other unallocated fax lines (i.e., an idle fax line) is in use (operation S640). If an idle fax line is detected among the other unallocated fax lines (operation S650), the idle line may be selected as the fax line to perform fax job.

Once the fax line to perform fax job is determined, one or more fax images corresponding to a desired fax job is generated (operation S660). Specifically, the TTI corresponding to the allocated fax line allocated to the authorized user is produced, and the fax image is generated by amalgamating the produced TTI and fax job. In an exemplary embodiment, a fax image is produced after selecting the fax line to perform the fax job, however, the fax image may be produced prior to selecting the fax line.

Next, the fee which will be charged to the user is calculated (operation S670). Specifically, when the user transmits a fax image through an allocated fax line allocated to the authorized user, the fax usage fee corresponding to the performed fax job is charged to the related user. If the user transmits a fax image using an unallocated fax line (i.e., an idle fax line) unallocated to the authorized user, the usage fax fee of fax job is charged to the user corresponding to the idle line through which the fax image is transmitted. The corresponding amount of the charged fax fee may then be deducted from the printing fee or the copying fee of the user corresponding to the idle line through which the fax image is transmitted. Then, the corresponding amount of the charged usage fax fee is applied to the printing fee or the copying fee of the user who actually executed the fax job. In an exemplary embodiment, the charged usage fax fee is calculated prior to transmitting the fax image; however, the charged usage fax fee may be calculated after transmitting the fax image.

The produced fax image is transmitted through the selected fax line (operation S680). Specifically, when the allocated fax line allocated to the user is available (i.e., not in use), the generated fax image is transmitted through the allocated fax line allocated to the user. However, if the allocated fax line allocated to the user is in use (i.e., unavailable), the generated fax image is transmitted by using an idle line among the plural fax lines, which is not allocated to the user.

Accordingly, a fax transmitting method according to an exemplary embodiment can execute the fax transmission, even if the fax line allocated to the user is in use, through another idle line. Further, regardless of the fax lines, the fax receiving counterpart may easily confirm the counterpart who transmitted the fax by producing and using the TTI corresponding to the fax line allocated to the user. Furthermore, even if the fax transmission is performed through another fax line that is unallocated to the user who performed the fax job, the resulting usage fax fee may be properly charged to the correct user. It is appreciated that the fax transmitting method as depicted in FIG. 6 may be performed in the image forming apparatus 100 having the configuration of FIG. 1 or in other image forming apparatuses having different configurations.

The present general inventive concept can also be embodied as computer-readable codes on a computer-readable medium. The computer-readable medium can include a computer-readable recording medium and a computer-readable transmission medium. The computer-readable recording medium is any data storage device that can store data as a program which can be thereafter read by a computer system. Examples of the computer-readable recording medium include read-only memory (ROM), random-access memory (RAM), CD-ROMs, DVDs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains

Although a few exemplary embodiments of the present general inventive concept have been shown and described, it will be appreciated by those skilled in the art that changes may be made in these exemplary embodiments without departing from the principles and spirit of the present general inventive concept, the scope of which is defined in the appended claims and their equivalents.

## Claims

1. An image forming apparatus having a plurality of fax lines to perform a fax job, comprising:
a user interface unit to receive a fax job request from a user allocated to at least one allocated fax line among the plurality of fax lines ;
a TTI producing unit to produce a TTI corresponding to the allocated fax line of the user;
an image processing unit to produce a fax image based on the produced TTI and the fax job request; and
a fax unit to transmit the fax image using an idle line included in the plurality of fax lines when the at least one allocated fax line of the user is in use.

2. The apparatus as claimed in claim 1, wherein the user interface unit determines an authenticated user based on an inputted user ID and inputted password and receives the fax job request in response to determining the authenticated user.

3. The apparatus as claimed in claim 1 or 2, wherein the TTI producing unit produces a TTI including information of a fax number of the at least one allocated fax line of the user.

4. The apparatus as claimed in one of claims 1 to 3, further comprising:
a fee charging unit to calculate usage fees of each user;
a storage unit to store the usage fees of each user;
wherein the fee charging unit calculates the usage fees of each user based on the fax line used to transmit the fax image of the fax job, deducts the calculated usage fees from at least one of a printing fee and a copying fee corresponding to the user based on to the idle line used to transmit the fax image, and charges the calculated usage fees to the at least one printing fee and copying fee of the user that performed the fax job.

5. The apparatus as claimed in one of claims 1 to 4, further comprising:
a storage unit to store log information that indicates the user who performed the fax job and that indicates the fax line through which the fax image is transmitted.

6. The apparatus as claimed in one of claims 1 to 5, wherein the fax unit comprises:
a first modem that transmits a fax image using a first fax line; and
a second modem that transmits a fax image using a second fax line.

7. The apparatus as claimed in claim 6, wherein the TTI producing unit produces a TTI corresponding to the first fax line when a first user allocated to the first fax line transmits a fax image using the second fax line, and produces a TTI corresponding to the second fax line, when a second user allocated to the second fax line transmits a fax image using the first fax line.

8. The apparatus as claimed in claims 6 or 7, further comprising:
a fee charging unit that separately calculates first usage fees of the first user allocated to a first fax line and second usage fees of the second user allocated to a second fax line; and
a storage unit that stores the calculated first and second usage fees of the first and second users,
wherein the fee charging unit performs at least one of charging the first usage fees of the fax job to at least one of a printing fee and a copying fee of the first user, charging the second usage fees of the fax job to at least one of a printing fee and a copying fee of the second user, deducting the second usage fees from at least one of a printing fee and a copying fee of the second user and charging the second usage fee to at least one of a printing fee and a copying fee of the first user when the first user transmits a fax image using the second fax line, and deducting the first usage fees from at least one of a printing fee and a copying fee of the first user and charging the first usage fee to at least one of the printing fee and the copying fee of the second user when the second user transmits fax image using the first fax line.

9. A fax transmitting method of an image forming apparatus having plural fax lines, the method comprising:
receiving a fax job request from a user allocated to at least one of the fax line among the plural fax lines;
producing a TTI corresponding to a fax line allocated to the user;
producing fax image from the produced TTI and the fax job; and
transmitting the fax image using an idle line among the plural fax lines if the user's allocated fax line is in use.

10. The method as claimed in claim 9, wherein receiving a fax job request is inputted with an ID and a password from the user and then receives a request of the fax job from an authenticated user.

11. The method as claimed in claim 9 or 10, wherein producing a TTI produces a TTI including a fax number information allocated to the user.

12. The method as claimed in one of claims 9 to 11, further comprising:
calculating a usage fee of each user; and
storing the calculated usage fee of each user,
wherein the calculating the usage fee includes calculating the usage fee of a user based on the idle line used to transmit the fax image, deducting the calculated usage fees from at least one of a printing fee and a copying fee of a user based on the idle line used to transmit the fax image', and charging the calculated usage fees to the at least one printing fee and copying fee of the user who performed the fax job.

13. The method as claimed in one of claims 9 to 12, further comprising:
storing log information that indicates the user who performed the fax job and that indicates the fax line through which the fax image is transmitted.

14. The method as claimed in one of claims 9 to 13, wherein the plural fax lines include a first fax line and a second fax line, and
producing a TTI produces a TTI corresponding to the first fax line when a first user allocated to the first fax line transmits fax image using the second fax line, and produces a TTI corresponding to the second fax line, when the second user allocated to the second fax line transmits a fax image using the first fax line.

15. The method as claimed in one of claims 9 to 13, wherein the plural fax lines include the first fax line and the second fax line, and further comprises:
calculating separate first and second usage fees corresponding to the first user allocated to the first fax line and the second user allocated to the second fax line, respectively; and
storing the calculated first and second usage fees of the first and second user the second user,
wherein the calculating first and second usage fee comprises:
deducting a calculated first usage fee from at least one of a printing fee and a copy fee of the second user and charging the calculated first usage to at least one of a printing fee and a copying fee of the first user, when the first user transmits a fax image through the second fax line ; and
deducting a calculated second usage fee from the at least one printing fee and copying fee of the first user and charging the calculated second usage fee to the at least one printing fee and copying fee of the second user, when the second user transmits a fax image through the first fax line.
